(19) Europäisches Patentamt
European Patent Office
Office européen des brevets

(11) **EP 4 604 365 A1**

(12) **EUROPEAN PATENT APPLICATION**
published in accordance with Art. 153(4) EPC

(43) Date of publication:
**20.08.2025 Bulletin 2025/34**

(21) Application number: **23877070.5**

(22) Date of filing: **13.09.2023**

(51) International Patent Classification (IPC):
***H02K 3/18*** (2006.01)

(52) Cooperative Patent Classification (CPC):
**H02K 3/18**

(86) International application number:
**PCT/JP2023/033367**

(87) International publication number:
**WO 2024/080064 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 JP 2022165041**

(71) Applicants:
• **Top Co., Ltd.
Echizen-shi, Fukui 915-0861 (JP)**
• **Fukui Prefectural Government
Fukui-shi
Fukui 910-8580 (JP)**

(72) Inventors:
• **IIDA, Kazuya
Echizen-shi, Fukui 915-0861 (JP)**

• **AMAYA, Yuji
Echizen-shi, Fukui 915-0861 (JP)**
• **SHIMODE, Norihito
Echizen-shi, Fukui 915-0861 (JP)**
• **ITO, Toshio
Echizen-shi, Fukui 915-0861 (JP)**
• **ITO, Tamon
Echizen-shi, Fukui 915-0861 (JP)**
• **KAWABATA, Akihiro
Echizen-shi, Fukui 915-0861 (JP)**
• **SASAKI, Yoshinori
Fukui-shi, Fukui 910-0102 (JP)**
• **TANAKA, Taiki
Fukui-shi, Fukui 910-0102 (JP)**
• **OKAHASHI, Tomoya
Fukui-shi, Fukui 910-0102 (JP)**

(74) Representative: **Studio Torta S.p.A.
Via Viotti, 9
10121 Torino (IT)**

(54) **ROTATING MACHINE AND SERIES COIL GROUP**

(57)    A first coil (41) is formed by winding a first part of a rectangular wire in a spiral shape, and is provided to a first tooth (36). A second coil (42) is formed by winding a second part of the rectangular wire in a spiral shape, and is provided to a second tooth (37). A crossover wire (43) is formed by a third part of the rectangular wire, and connects the first coil (41) and the second coil (42) in series. The third part of the rectangular wire is continuous with the first part and the second part between the first part and the second part. The crossover wire (43) includes a twisted portion (44) and a non-twisted portion (45). At (44) the twisted portion, the third part is twisted in an outer circumferential direction of the third part. The second coil (42) has the second part wound in the same direction as the first part. A first line length of the twisted portion (44) is set to be equal to or less than a second line length of the non-twisted portion (45).

EP 4 604 365 A1

CIRCUMFERENTIAL
DIRECTION

30

31

37(35)  36(35)

33

43
41(40)
42(40)  } 50
46
47

32 →

SECOND
SIDE

LAMINATION
DIRECTION

FIRST
SIDE

FIG. 5

## Description

TECHNICAL FIELD

The present invention relates to a rotary machine such as a motor and a generator and a series coil group which two coils are series connected.

BACKGROUND ART

Patent document 1 discloses a method for manufacturing a stator. The stator is provided to a motor. The manufacturing method includes a forming process, an array process, an arranging process, and an assembling process. The forming process forms an air core coil. In the forming process, a processing portion bend processes a coil wire into a designed shape. The processing portion includes a conveyance portion and a deformation portion. The conveyance portion holds the coil wire between two drive rolls and feeds the coil wire out from a supply portion. The conveyance portion conveys the coil wire to the deformation portion while shaping the coil wire into a straight shape in a longitudinal direction. The deformation portion includes a press roll, a support roll, and a pressing roll. The support roll is arranged on one side of a conveyance path of the coil wire. The pressing roll is arranged on the other side of the conveyance path of the coil wire and moves in a direction intersecting the conveyance path. The deforming portion deforms the coil wire into a desired curvature by a pressing operation against the coil wire by the pressing roll. The coil wire passes through the deformed portion and becomes a formed body. The formed body develops in a helical shape. In the forming process, the formed body forms a coil unit. The coil unit sequentially arrays the required number of coils and crossover wires. In the case in which the stator has 3 phases and 12 cores, the coil unit includes 4 concentrated winding coils and 5 crossover wires. In the coil, straight portions and curved portions are formed alternately. The crossover wire in the coil unit circulates around a central axis of the coil. The crossover wire has the necessary length to connect coils of the same phase when the coils are arranged. In the forming process, U-phase, V-phase, and W-phase coil units are prepared.

The array process and the arranging process arrays the coils of a U-phase, a V-phase, and a W-phase coil units in one row to the following aspect. In the above-described aspect, in the case in which the U-phase, V-phase, and W-phase coil units are assembled in the order of arrangement in the motor and corresponding to the motor shape, crossover wires do not cross each other. The array process and the arranging process obtain a group of arrayed coils. In the arrayed coil group, all coils of the U-phase, V-phase, and W-phase coil units are fitted into the coil support body. In the arrayed coil group, the U-phase crossover wire is located between the W-phase crossover wire and the V-phase crossover wire, the V-phase crossover wire is located between the U-phase crossover wire and the W-phase crossover wire, and the W-phase crossover wire is located between the V-phase crossover wire and the U-phase crossover wire.

In the assembling process, a divided stator core provided with an insulating member is brought into contact with an end face of the coil support body, and the coils of the arrayed coil group are attached to the divided stator core. Coils are repeatedly attached to divided stator cores, and all coils are attached to multiple divided stator cores. Thereby, the assembling process obtains a straight shaped stator. After that, in the assembling process, the straight shaped stator is fixed in an annular shape to obtain an annular shaped stator.

Patent document 2 discloses a winding structure. The winding structure uses a wire material whose cross section shape having a rectangular shape. The cross section shape of the rectangular wire material is rectangular. The winding structure is arranged to have a plurality of winding layer portions in close contact with each other in a thickness direction. The thickness direction of the winding layer portion is a long side direction of the cross section of the wire material having the rectangular cross section. The inner portion of the winding structure is formed with a space. In this space, a support body is inserted, and the winding structure is attached to this support body. The winding layer portion is overlapped by deforming a wire material with a rectangular cross section so as to curve at right angles in a short side direction of the cross section in a spiral shape. "Spiral shape" is a state in which the single wire material is laminated so as to overlap while circulating. "Helical shape" is a state in which the single wire material is not laminated while circulating, and is shifted in the thickness direction of the winding layer portion. The winding layer portion may be curved in the long side direction of the cross section of the wire material and be overlapped in a spiral shape.

The winding layer portion is formed by a plurality of circumferential parts. The circumferential part, by deforming the wire material in a curved manner at four points in a right-angle direction, has a rectangular shape with rounded corners when viewed from the thickness direction of the winding layer portion. Corners of the circumferential parts are formed into a curved part with a predetermined curvature. Side portions of the circumferential part are formed in a straight state and include a pair of long side parts and a pair of short side parts. In curved parts that become corner portions, the curvature gradually decreases from the circumferential part on an inner peripheral side to the circumferential part on an outer peripheral side. Along with this, the plurality of circumferential parts is overlapped so that the wire material is in close contact with each other over the entire circumference.

The winding structure includes a first winding layer portion and a second winding layer portion as winding layer portions. The first winding layer portion and the second winding layer portion are arranged alternately. In the first winding layer portion, the wire material is overlapped in a spiral shape from the outer peripheral side to the inner peripheral side. The first winding layer portion transfers to the second winding layer portion by a first connecting part. The first connecting part is formed by the wire material continuing from the inner peripheral side of the first winding layer portion. In the second winding layer portion, the wire material is overlapped in a spiral shape from the inner peripheral side to the outer peripheral side. The second winding layer portion transfers to the next first winding layer portion by a second connecting part. The second connecting part is formed by the wire material continuing from the outer peripheral side of the second winding layer portion. The first winding layer portion and the second winding layer portion are arranged to close contact.

The wire material is helically deformed by repeating two successive first deformation region and second deformation region. The first deformation region corresponds to the first winding layer portion. The wire material in the first deformation region goes around helically from the outer side to the inner side. The curvature of the curved part in the first deformation region increases as it goes inward. The second deformation region corresponds to the second winding layer portion. The wire material in the second deformation region goes around helically from the inner side to the outer side. The curvature of the curved part in the second deformation region decreases as it goes outward. At the part where transferring from the first deformation region to the second deformation region, a third deformation point of the second deformation region runs into a first deformation point of the first deformation region. Thereby, the second winding layer portion can be formed adjacent to the first winding layer portion. At the part where transferring from the second deformation region to the first deformation region, a sixth deformation point of the first deformation region runs into a fourth deformation point of the second deformation region. Thereby, the first winding layer portion can be formed adjacent to the second winding layer portion.

A forming apparatus deforms the wire material into a helical shape. The forming apparatus includes a conveyance mechanism and a deformation mechanism. The conveyance mechanism has a drive roller and a driven roller. The drive roller conveys the wire material along the longitudinal direction. The driven roller is arranged to oppose the drive roller. The deformation mechanism has a pressing roller, a fulcrum roller, and a press roller. The pressing roller deforms the wire material to curve. The fulcrum roller is arranged to oppose the pressing roller. The press roller is arranged at the upstream of the fulcrum roller in a conveyance direction. The wire material is held between the drive roller and the driven roller, and is conveyed in the longitudinal direction while being shaped into a straight shape. The wire material passes between the pressing roller and the fulcrum roller while contacting the press roller. The pressing roller approaches the fulcrum roller and separates from the fulcrum roller to perform a pressing operation.

The forming apparatus alternately performs a first deformation process and a second deformation process while continuously conveying the wire material. The first deformation process corresponds to the first deformation region. In the first deformation process, the wire material is conveyed by a length of the long side part corresponding to the outermost circumference side, and after that, the curved part with a predetermined curvature is formed by the pressing operation of the pressing roller. Continuously, in the first deformation process, the wire material is conveyed by a length of the short side part, and after that, the curved part with a predetermined curvature is formed by the pressing operation of the pressing roller. In the first deformation process, a deformation process is repeated to form the long side part, the curved part, the short side part, and the curved part. The first deformation process is to deform the wire material so that the wire material goes around in a helical shape from the outer side to the inner side. Further, in the first deformation process, the curvature of the curved part on the inner side is deformed to be greater than the curvature of the adjacent curved part on the outer side.

The second deformation process corresponds to the second deformation region. In the second deformation process, after forming the first deformation region, the wire material is conveyed by a length corresponding to the first connecting part. Next, in the second deformation process, the curved part is formed by the pressing operation of the pressing roller. Further, in the second deformation process, the wire material is conveyed by a length of the long side part corresponding to the innermost circumference side, and after that, the curved part with a predetermined curvature is formed by the pressing operation of the pressing roller. Continuously, in the second deformation process, the wire material is conveyed by a length of the short side part, and after that, the curved part with a predetermined curvature is formed by the pressing operation of the pressing roller. In the second deformation process, a deformation process is repeated to form the long side part, the curved part, the short side part, and the curved part. The second deformation process is to deform the wire material so that the wire material goes around in a helical shape from the inner side to the outer side. Further, in the second deformation process, the curvature of the curved part on the outer side is deformed to be lesser than the curvature of the adjacent curved part on the inner side. In the first deformation process after the second deformation process, the wire material is conveyed by a length corresponding to the second connecting part.

In addition, Patent Document 3 discloses a method for manufacturing a winding wire and a manufacturing apparatus. The manufacturing method and manufacturing apparatus deform a wire material into a helical shape to form a formed body. The formed body is compressed to form the winding wire. The winding wire turns into a coil. Furthermore, Patent Document 4 discloses a apparatus and a process for deforming a conductor protruding from the side surface of a stator or a rotor of an electric machine, Patent Document 5 discloses a stator of a rotating electric machine and a method for manufacturing a coil of the stator of the rotating electric machine, Patent Document 6 discloses a method for manufacturing a stator winding wire of a rotating electric machine and apparatus for manufacturing thereof, and Patent Document 7 discloses a method for manufacturing a coil assemble body of a rotating electrical machine.

CITATION LIST

Patent Literature

Patent Document 1: JPA No. 2016-63663

Patent Document 2: JPA No. 2014-93846

Patent Document 3: JPA No. 2014-93847

Patent Document 4: JPA No. 2022-501986

Patent Document 5: JPA No. 2011-188724

Patent Document 6: JPA No. 2010-110199

Patent Document 7: JPA No. 2009-278708

SUMMARY OF THE INVENTION

Problems to be Solved by the Invention

The rotary machine includes a coil having the following structure. This structure is formed by concentrated winding a conducting wire. In the case in which the rotary machine is a motor or a generator, the stator includes a stator core and a plurality of coils. The stator core includes a plurality of teeth. The coil is formed by concentrated winding the conducting wire. The plurality of coils is provided to the plurality of teeth, respectively. The plurality of coils includes a plurality of coils of the U-phase, a plurality of coils of the V-phase, and a plurality of coils of the W-phase. The plurality of coils of the same phase is connected electrically. Furthermore, two coils of the same phase may be connected in series and be provided to two teeth adjacent in the circumferential direction.

There is a case in which a rectangular wire is employed as the conducting wire which forms the coil. The rectangular wire has a rectangular cross-sectional shape in its raw material state before winding. There is a case in which a space factor can be improved by forming the coil with the rectangular wire. By improving the space factor, it is possible to achieve higher efficiency of the rotary machine. Such a coil can also be employed in a transformer as well as a rotary machine.

Assume that the coil is made of the rectangular wire. Welding can be employed to connect the coils in the same phase. However, the inventor focused on the point that when welding is used to the connect coils of the same phase, quality control of the welded portions is required. That is, the inventor thought that it is necessary to control the welded portions to ensure that no connection failure had occurred. Furthermore, the inventor focused on the point that when welding is used to connect coils of the same phase, the stator tends to become larger. That is, the inventor thought that if it is necessary to secure the following space in the stator, the stator will become larger by this space. Examples of the above-described spaces include the space to arrange the two rectangular wires to be connected, the space required to insert a welder torch, and the space which is provided to prevent the heat during welding from affecting surrounding parts. Therefore, the inventor considered a coil structure made of the rectangular wire that is less likely to cause electrical connection failure between the two coils of the same phase and that can suppress an increase in the size of the stator. At that time, the inventor took into consideration the point of improving the productivity of the coils made of the rectangular wire. Furthermore, the inventor also took into consideration the point of the possibility of corresponding to a stator structure in which the two coils made of the rectangular wire are connected in series, and the two coils are provided to the two teeth adjacent to each other in the circumferential direction.

An object of the present invention is to provide a technique that can improve the productivity of two coils made of a rectangular wire connected in series while suppressing the increase in the size of a stator.

Solutions to Problems

One aspect of the present invention is a rotary machine including: a rotor; and a stator, wherein the stator including: a stator core which is formed by laminating steel plates, and which includes a yoke and a plurality of teeth which protrudes from the yoke towards a side of the rotor; a first coil which is formed by winding a first part of a rectangular wire in a spiral shape, and which is provided to a first tooth of the plurality of teeth; a second coil which is formed by winding a second part of the rectangular wire in a spiral shape, and which is provided to a second tooth of the plurality of teeth; a crossover wire which is formed by a third part of the rectangular wire, the third part being continuous with the first part and the second part between the first part and the second part, and which connects the first coil and the second coil in series, wherein the crossover wire including: a twisted portion which is twisted the third part which forms the crossover wire in an outer circumferential direction of the third part; and a non-twisted portion which excludes the twisted portion, wherein the second coil has the second part wound in a spiral shape in a same direction as the first part, wherein a first line length of the twisted portion in a length direction of the rectangular wire is set to be equal to or less than a second line length of the non-twisted portion in the length direction.

The stator may include a lead wire which is formed by a fourth part of the rectangular wire which continues to an opposite side to the third part of the first part, and which is provided on a first side in a lamination direction which is further than a first end surface of the first side in the lamination direction in which the steel plates of the stator core are laminated, wherein the crossover wire may be provided on a second side in the lamination direction which is further than a second end surface of the second side opposite to the first side in the lamination direction of the stator core.

The first tooth may be adjacent to the second tooth in a circumferential direction about a rotation axis of the rotor.

Another aspect of the present invention is a series coil group including: a first coil which is formed by winding a first part of a rectangular wire in a spiral shape, and which is provided to a first tooth of a plurality of teeth provided to a stator core of a stator of a rotary machine; a second coil which is formed by winding a second part of the rectangular wire in a spiral shape, and which is provided to a second tooth of the plurality of teeth; and a crossover wire which is formed by a third part of the rectangular wire, the third part being continuous with the first part and the second part between the first part and the second part, and which connects the first coil and the second coil in series, wherein the crossover wire including: a twisted portion which is twisted the third part which forms the crossover wire in an outer circumferential direction of the third part; and a non-twisted portion which excludes the twisted portion, wherein the second coil has the second part wound in a spiral shape in a same direction as the first part, wherein a first line length of the twisted portion in a length direction of the rectangular wire is set to be equal to or less than a second line length of the non-twisted portion in the length direction.

According to the above-mentioned rotary machine and series coil group, it is possible to easily manufacture the first coil and the second coil connected by the crossover wire. After winding the single continuous rectangular wire, and by twisting the third part of this rectangular wire at a position that will become the twisted portion of the rectangular wire, it is possible to form the first coil and the second coil which are connected by the crossover wire. The winding process and the connecting process of the first coil and the second coil can be simplified.

Advanced Effects of the Invention

According to the present invention, it is possible to improve the productivity of the two coils made of the rectangular wire connected in series while suppressing the increase in the size of the stator.

BREIF DESCRIPTION OF THE DRAWINGS

Fig. 1 is a perspective view which shows an example of a schematic structure of a motor as a rotary machine. The figure shows the motor in a state in which as viewed from a first side in a lamination direction.
Fig. 2 is a plan view which shows an example of a schematic structure of the motor.
Fig. 3 is a perspective view which shows an example of a schematic structure of a rotor. The figure shows the rotor in a state in which as viewed from the first side in the lamination direction.
Fig. 4 is a perspective view which shows an example of a schematic structure of a stator. The figure shows the stator in a state in which as viewed from the first side in the lamination direction.
Fig. 5 is a perspective view which shows an example of a schematic structure of the stator. The figure shows the stator in a state in which as viewed from a second side in the lamination direction.
Fig. 6 is a perspective view which shows examples of schematic structures of a yoke piece, a tooth, coils, and insulation members. The figure shows the yoke piece, the tooth, the coils and the insulation members in a state in which as viewed from the first side in the lamination direction.
Fig. 7 is a perspective view which shows examples of schematic structures of the yoke piece, the teeth, the coils, and the insulation members. The teeth, the coils and the insulation members are shown in an assembled state. The figure shows the yoke piece and an assemble body of the teeth, the coils and the insulation members in a state as viewed from the first side in the lamination direction.
Fig. 8 is a perspective view which shows an example of a schematic structure of a part of the stator. The figure shows the part of the stator in a state in which as viewed from the first side in the lamination direction.
Fig. 9 is a perspective view which shows an example of a schematic structure of a rectangular wire. The rectangular wire is shown in a raw material state before being winding. A first part, a second part, a third part, a fourth part and a fifth part of the rectangular wire are shown with intermediate portions of the first part, the second part, the third part, the fourth part and the fifth part, respectively, omitted.
Fig. 10 is a connecting diagram showing an example of a connecting aspect of a plurality of coils.
Fig. 11 is perspective view which shows examples of schematic structures of a intermediate body and a series coil group. The figure shows the intermediate body and the series coil group in a state in which as viewed from the first side in the lamination direction. The figure shows a second process of a method for manufacturing the series coil group.

DESCRIPTION OF EMBODIMENTS

Embodiments for carrying out the present invention will be described with reference to the drawings. The present invention is not limited to the configurations described below, and various configurations can be employed based on the same technical idea. For example, a part of the configurations shown below may be omitted or may be replaced by another configuration. The present invention may include another configuration. The drawings schematically show a predetermined configuration. In each drawing, correspondence with another drawing or correspondence with a numerical value which will be described later specifying the configuration in the drawing may not be accurate in some cases.

<Motor 10>

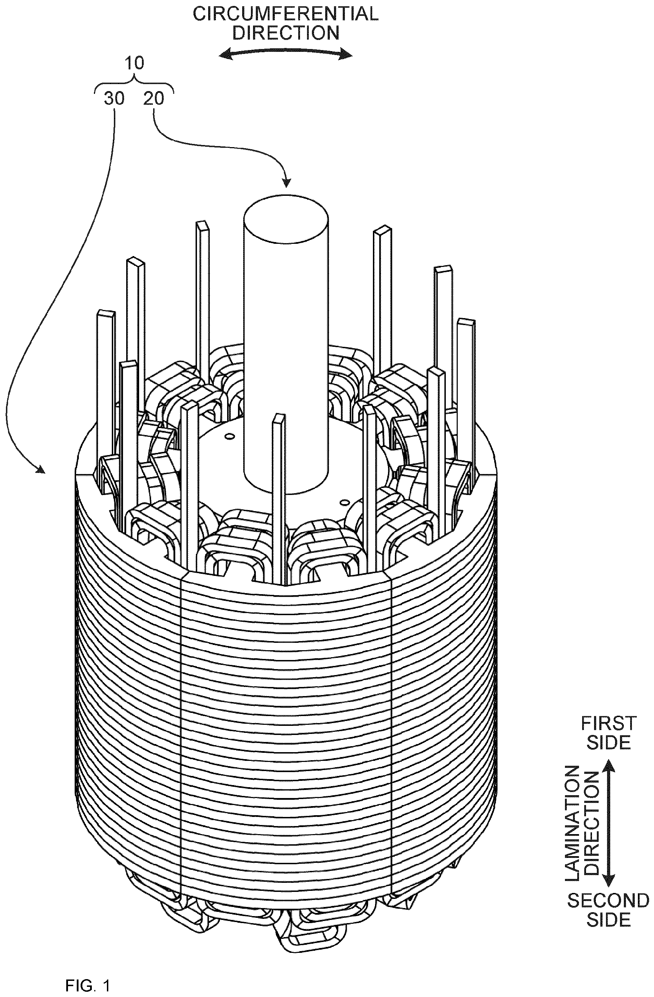

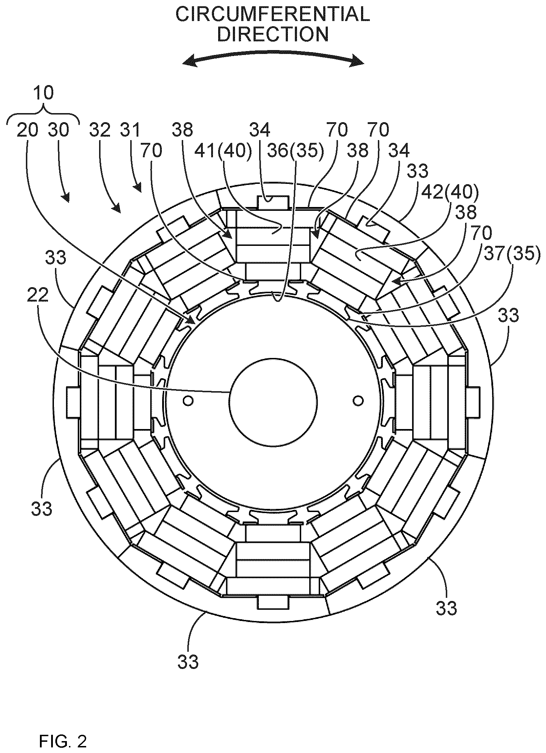

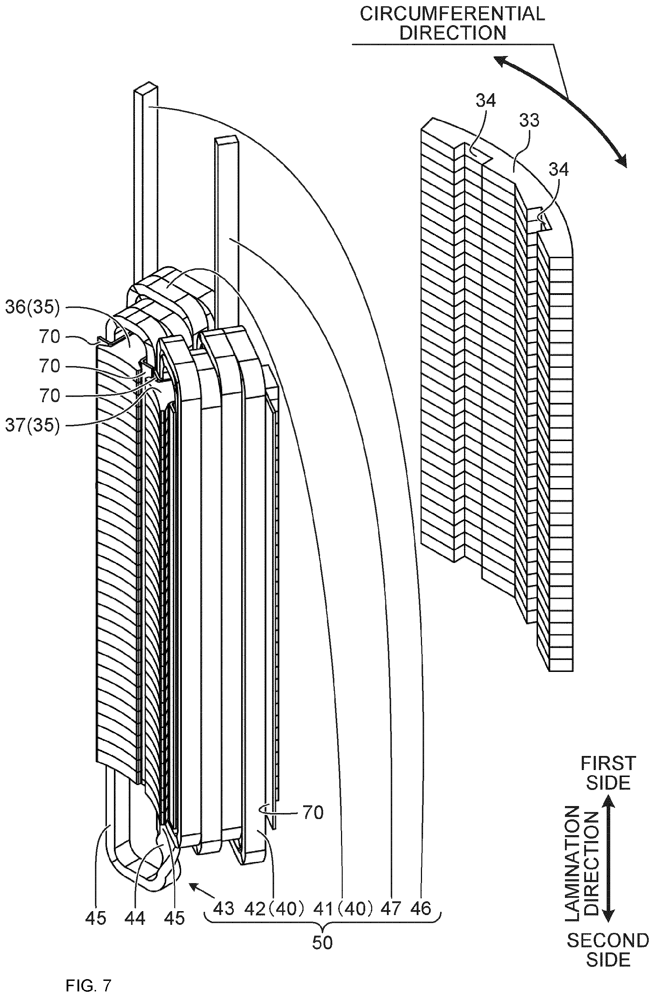

A motor 10 as a rotary machine will be described with reference to Figs. 1 to 11. The motor 10 is installed in various products. For example, the motor 10 is used as a drive source for electric vehicles. Examples of electric vehicles include electric automobiles, electric bicycles, electric wheelchairs, electric carts, and electric catering vehicles. Electric automobiles include hybrid vehicles. The motor 10 includes a rotor 20 and a stator 30 (see Figs. 1 and 2). In the embodiment, an inner rotary type brushless motor is exemplified as the motor 10.

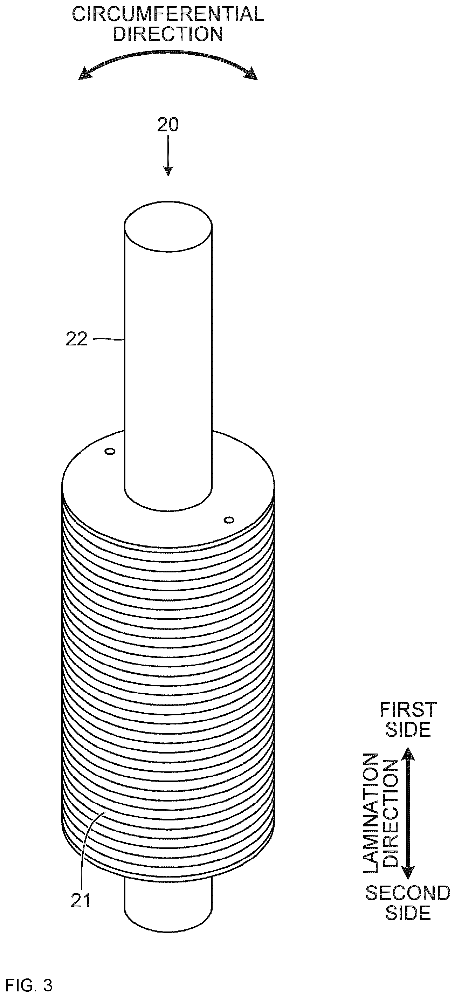

The rotor 20 includes a rotor core 21, a plurality of permanent magnets, and a shaft 22 (see Figs. 2 and 3). In Figs. 2 and 3, the illustration of the permanent magnets is omitted. For example, the rotor core 21 is formed by laminating punched steel plates while punching the steel plate with a press machine. As the steel plate, an electromagnetic steel plate is employed. The rotor core 21 is provided with a plurality of permanent magnets. The plurality of permanent magnets is each housed in a plurality of spaces formed in the rotor core 21. In the case in which the rotor 20 is such a form of rotor, the motor 10 is referred to as an IPM (Interior Permanent Magnet) motor. The plurality of permanent magnets may be provided on an outer peripheral surface of the rotor core 21. In the case in which the rotor 20 is such a form of rotor, the motor 10 is referred to as a SPM (Surface Permanent Magnet) motor.

The shaft 22 is fixed to a through hole formed in the central portion of the rotor core 21. Bearings are attached to the shaft 22 on both sides of the rotor core 21. The bearings are supported by support portions. For example, the support portions are provided in the stator 30 or provided in a housing which supports the stator 30. In Figs. 1 and 2, the illustration of the bearings, the support portions, and the housing is omitted. In the embodiment, a circumference direction with the shaft 22 as the center is referred to as a "circumferential direction", and a radiation direction with the shaft 22 as the center is referred to as the "radial direction". The shaft 22 serves as a rotation shaft of the rotor 20. The rotor 20 rotates about the shaft 22 in the circumferential direction. The rotor 20 is the same as the rotor provided to a known motor (rotary machine). Therefore, other descriptions of the rotor 20 will be omitted.

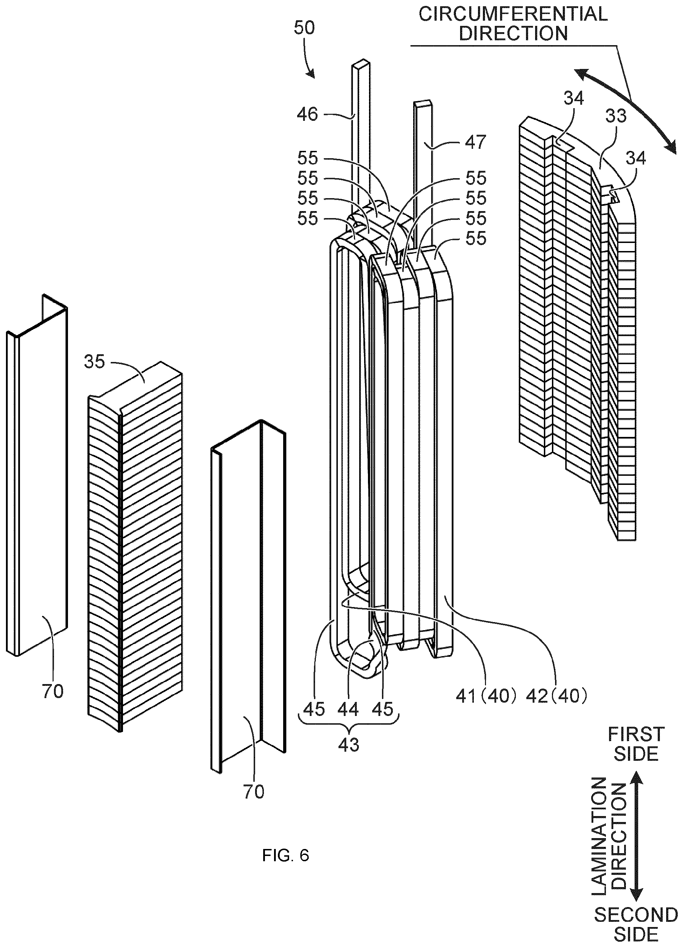

The stator 30 includes a stator core 31, and a plurality of coils 40 (see Figs. 2, 4, and 5). Further, the stator 30 includes insulating members 70 (see Fig. 6). In Fig. 2, the illustration of the coils 40 is simplified, and in Figs. 1, 4, and 5, the illustration of the insulating members 70 is omitted. The stator core 31 includes a yoke 32, and a plurality of teeth 35 (see Figs. 2, 4, and 5). The plurality of teeth 35 in the inner rotary type motor 10 protrudes to the inner side of the radial direction at the inner peripheral of the yoke 32. In the stator core 31, slots 38 is formed as the same number of the teeth 35 (see Fig. 2). The slot 38 is a space formed between the adjacent teeth 35. The number of slots 38 of the stator 30 is appropriately determined in consideration of the following points. The above-described points are, for example, the performance required for the motor 10.

In the embodiment, the stator core 31 has a divided structure in which the stator core 31 is divided into the yokes 32 and the plurality of teeth 35 (see Figs. 2, and 4 to 8). The number of the teeth 35 is twelve (see Fig. 2). In this case, the number of the slot 38 is twelve. In the stator core 31, the twelve teeth 35 are provided at an equal angle interval. In other words, the twelve teeth 35 are equally spaced at 30° intervals in the circumferential direction. The yoke 32 has an aspect in which six yoke pieces 33 are equally divided. In one yoke piece 33, two teeth 35 are provided (see Figs. 2, 4, 5, 7, and 8). The stator core 31 is formed by attaching two teeth 35 to one yoke piece 33, and assembling six yoke pieces 33 in an annular manner (see Figs. 2, and 4 to 8). The number of the teeth 35, the division number of the annular yoke 32, and the number of the teeth 35 corresponding to one yoke piece 33 may be a different aspect from the embodiment. These numbers in the embodiment are examples.

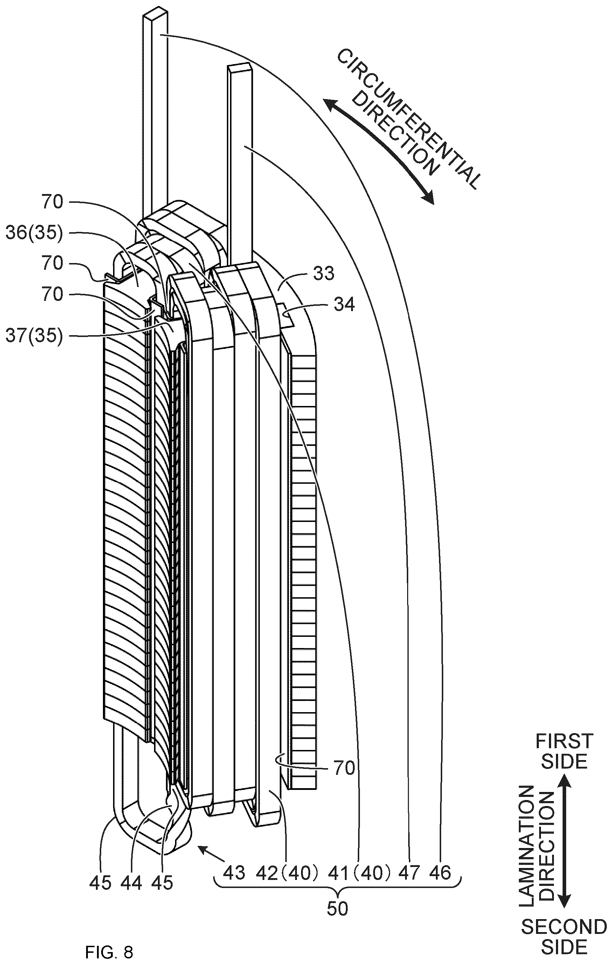

The yoke piece 33 includes mounting grooves 34 (see Figs. 2, and 6 to 8). The mounting grooves 34 are provided on the inner side in the radial direction in which the teeth 35 are provided. Outer side end in the radial direction of the tooth 35 is fitted to the mounting groove 34 (see Figs. 2 and 8). In Figs. 1, 4, and 5, the illustration of the stator core 31 is simplified, and the illustration of the fitting structure of the yoke piece 33 and the tooth 35 is omitted. In yoke piece 33, a first engaging portion may be provided to an inner surface of the mounting groove 34, and in teeth 35, a second engaging portion may be provided to the outer side end in the radial direction. The second engaging portion engages with the first engaging portion. That is, the tooth 35 is attached to the yoke piece 33 in a state in which the outer side end in the radial direction engages the inner surface of the mounting groove 34. In the embodiment, the illustration of the first engaging portion and the second engaging portion is omitted.

For example, the yoke piece 33 and the tooth 35 are formed by laminating punched steel plates while punching the steel plate with a press machine. As the steel plate, an electromagnetic steel plate is employed. In the embodiment, a direction in which the steel plates are laminated in the yoke piece 33 and the tooth 35 is referred to as a "lamination direction". In the case in which the stator core 31 is formed by a plurality of yoke pieces 33 and the plurality of teeth 35 (see Figs. 2, and 4 to 8), the lamination direction may be the direction in which the steel plates are laminated in the stator core 31. The lamination direction coincides with the direction in which the steel plates are laminated in the rotor core 21. Assume that the yoke piece 33 includes the first engaging portion at the inner surface of the mounting groove 34 and the tooth 35 includes the second engaging portion at the outer side end in the radial direction. In this case, the attachment of the tooth 35 to the yoke piece 33 may be carried out from either the first side or the second side of the lamination direction.

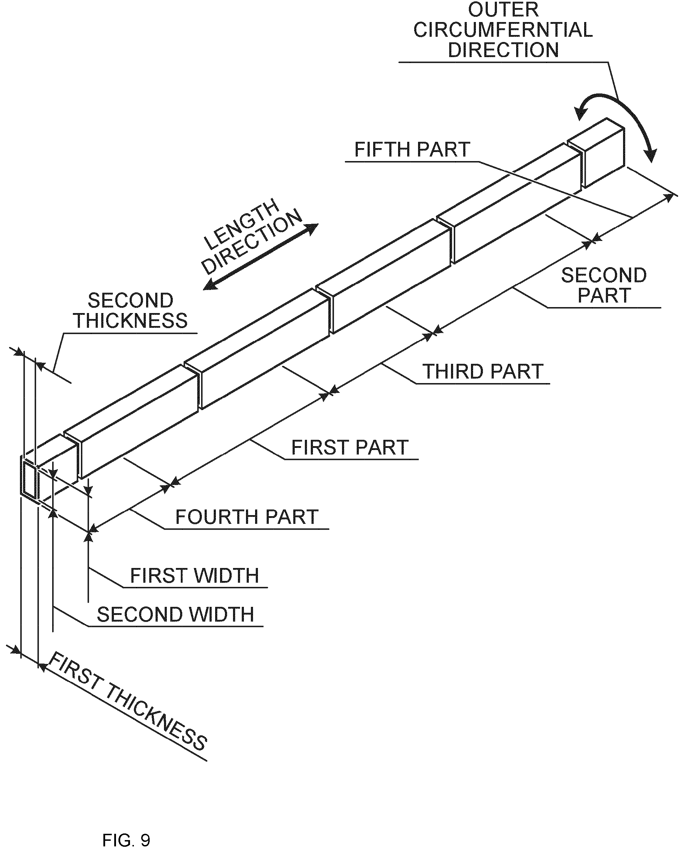

The coil 40 is formed by a rectangular wire. The rectangular wire covers the surface of the conductor with a coating. An example of the conductor includes copper. An example of the coating includes an insulating coating. The insulating coating has electrical insulation properties. The rectangular wire and the conductor have a rectangular cross-sectional shape in their raw material state before winding (see Fig. 9). The width and thickness of the cross-sectional shape of the rectangular wire are referred to as a "first width" and a "first thickness", and the width and thickness of the cross-sectional shape of the conductor of the rectangular wire are referred to as a "second width" and a "second thickness" (see Fig. 9). Examples of the first width and the first thickness of the rectangular wire include 2.83 mm and 1.63 mm, examples of the second width and second thickness of the conductor include 2.7 mm and 1.5 mm, and an example of a thickness of the coating includes 0.065 mm. When the first width and the first thickness are 2.83 mm and 1.63 mm, the circumference length of the rectangular wire is 8.92 mm, and when the second width and the second thickness are 2.7 mm and 1.5 mm, the circumference length of the conductor is 8.4 mm. In the embodiment, the circumference length of the rectangular wire is defined as twice the sum of the first width and the first thickness, and the circumference length of the conductor is defined as twice the sum of the second width and the second thickness.

The first width and the first thickness of the rectangular wire, the second width and the second thickness of the conductor, and the thickness of the coating may be different from the values mentioned above. The first width and the first thickness of the rectangular wire, the second width and the second thickness of the conductor, and the thickness of the coating are appropriately determined in consideration of various conditions. For example, the second width and the second thickness of the conductor may be 2.0 mm and 0.7 mm, or may be 6.5 mm and 3.5 mm. When the second width and the second thickness are 2.0 mm and 0.7 mm, the circumference length of the conductor is 5.4 mm. When the second width and the second thickness are 6.5 mm and 3.5 mm, the circumference length of the conductor is 20 mm. In the rectangular wire, the circumference length of the conductor may be 5.4 to 20 mm. Examples of standards for rectangular wire include JIS C3215-0-2 (Specifications for particular types of winding wires - Part 0-2: General requirements - Enamelled rectangular copper wire) and JIS C3104 (Rectangular copper wires).

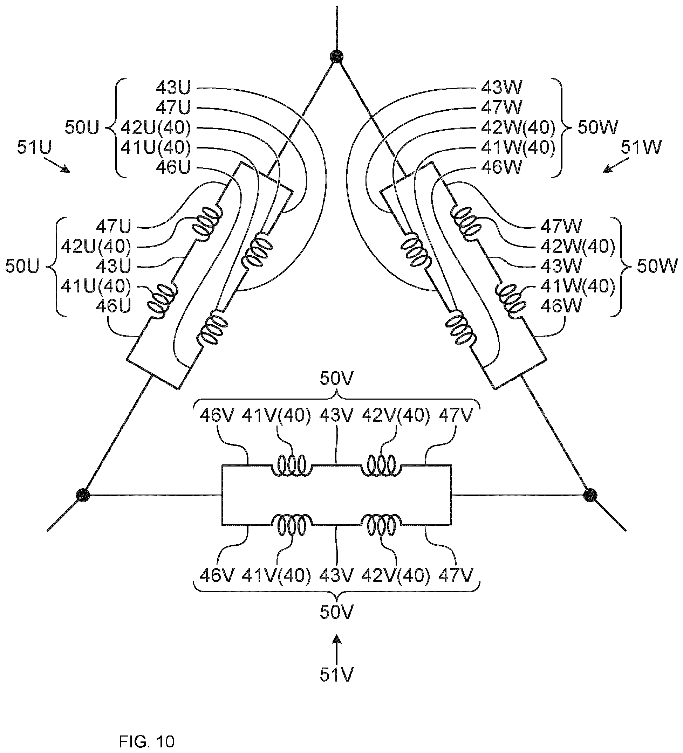

The plurality of coils 40 is classified into any of U-phase, V-phase, and W-phase (see Fig. 10). In the embodiment, the U-phase of the coil 40 is referred to as a "coil 40U", the V-phase of the coil 40 is referred to as a "coil 40V", and the W-phase of the coil 40 is referred to as a "coil 40W". The stator 30 includes a plurality of coils 40U as the U-phase coil 40, a plurality of coils 40V as the V-phase coil 40, and a plurality of coils 40W as the W-phase coil 40. The plurality of coils 40U is connected to each other and forms a U-phase coil unit 51U. The plurality of coils 40V is connected to each other and forms a V-phase coil unit 51V. The plurality of coils 40W is connected to each other and forms a W-phase coil unit 51W.

The coil unit 51U has at least two coils 40U connected in series by a crossover wire 43U. The plurality of coils 40U and the crossover wire 43U connected in series are integrally formed by a single continuous rectangular wire. In the embodiment, a connected body (connected structure) of the plurality of coils 40U connected in series by the crossover wire 43U is referred to as a "series coil group 50U". In the series coil group 50U, parts on both end sides of this single rectangular wire are each drawn out to a predetermined length. In the embodiment, these drawn-out rectangular wire parts are referred to as "lead wires 46U, and 47U". In this single rectangular wire, the part on one end side forms the lead wire 46U, and the part on the other end side forms the lead wire 47U.

The coil unit 51V has at least two coils 40V connected in series by a crossover wire 43V. The plurality of coils 40V and the crossover wire 43V connected in series are integrally formed by a single continuous rectangular wire. In the embodiment, a connected body (connected structure) of the plurality of coils 40V connected in series by the crossover wire 43V is referred to as a "series coil group 50V". In the series coil group 50V, parts on both end sides of this single rectangular wire are each drawn out to a predetermined length. In the embodiment, these drawn-out rectangular wire parts are referred to as "lead wires 46V, and 47V". In this single rectangular wire, the part on one end side forms the lead wire 46V, and the part on the other end side forms the lead wire 47V.

The coil unit 51W has at least two coils 40W connected in series by a crossover wire 43W. The plurality of coils 40W and the crossover wire 43W connected in series are integrally formed by a single continuous rectangular wire. In the embodiment, a connected body (connected structure) of the plurality of coils 40W connected in series by the crossover wire 43W is referred to as a "series coil group 50W". In the series coil group 50W, parts on both end sides of this single rectangular wire are each drawn out to a predetermined length. In the embodiment, these drawn-out rectangular wire parts are referred to as "lead wires 46W, and 47W". In this single rectangular wire, the part on one end side forms the lead wire 46W, and the part on the other end side forms the lead wire 47W.

In the embodiment, the stator 30 includes four coils 40U, four coils 40V, and four coils 40W (see Fig. 10). In the stator 30, the four coils 40U are connected to form the coil unit 51U, the four coils 40V are connected to form the coil unit 51V, and the four coils 40W are connected to form the coil unit 51W. The stator 30 includes the coil units 51U, 51V, and 51W.

In the coil unit 51U, each two of the four coils 40U are connected in series by the crossover wire 43U to form the series coil groups 50U. The stator 30 includes two sets of series coil groups 50U in the coil unit 51U. The two sets of series coil groups 50U are connected together by two lead wires 46U and are connected together by two lead wires 47U. Two sets of series coil groups 50U are connected in parallel.

In the coil unit 51V, each two of the four coils 40V are connected in series by the crossover wire 43V to form the series coil groups 50V. The stator 30 includes two sets of series coil groups 50V in the coil unit 51V. The two sets of series coil groups 50V are connected together by two lead wires 46V and are connected together by two lead wires 47V. Two sets of series coil groups 50V are connected in parallel.

In the coil unit 51W, each two of the four coils 40W are connected in series by the crossover wire 43W to form the series coil groups 50W. The stator 30 includes two sets of series coil groups 50W in the coil unit 51W. The two sets of series coil groups 50W are connected together by two lead wires 46W and are connected together by two lead wires 47W. Two sets of series coil groups 50W are connected in parallel.

However, the connection aspect of the plurality of coils 40U, the connection aspect of the plurality of coils 40V, and the connection aspect of the plurality of coils 40W may be different from those in Fig. 10. The plurality of coils 40U may all be connected in series. The plurality of coils 40V may all be connected in series. The plurality of coils 40W may all be connected in series. The connection aspect of the plurality of coils 40U, the connection aspect of the plurality of coils 40V, and the connection aspect of the plurality of coils 40W are appropriately determined in consideration of various conditions. In the stator 30, the coil units 51U, 51V, and 51W are delta connected (see Fig. 10). However, the connection aspect of the coil units 51U, 51V, and 51W may not be a delta connection. An example of a connection aspect different from the delta connection includes a star connection. The connection aspect of the coil units 51U, 51V, and 51W is appropriately determined in consideration of various conditions.

In the embodiment, in the case in which the coils 40U, 40V, and 40W are not distinguished, or in the case in which they are collectively referred to, they are referred to as a "coil 40". In the case in which the coil units 51U, 51V, and 51W are not distinguished, or in the case in which they are collectively referred to, they are referred to as a "coil unit 51". In the case in which the crossover wires 43U, 43V, and 43W are not distinguished, or in the case in which they are collectively referred to, they are referred to as a "crossover wire 43". In the case in which the lead wires 46U, 46V, and 46W are not distinguished, or in the case in which they are collectively referred to, they are referred to as a "lead wire 46". In the case in which the lead wires 47U, 47V, and 47W are not distinguished, or in the case in which they are collectively referred to, they are referred to as a "lead wire 47". In the case in which the series coil groups 50U, 50V, and 50W are not distinguished, or in the case in which they are collectively referred to, they are referred to as a "series coil group 50". When distinguishing the two coils 40 of the series coil group 50, they are referred to as a "first coil 41" and a "second coil 42". When distinguishing the tooth 35 to which the first coil 41 is provided and the tooth 35 to which the second coil 42 is provided, they are referred to as a "first tooth 36" and a "second tooth 37". The first coil 41 is provided to the first tooth 36, and the second coil 42 is provided to the second tooth 37 (see Figs. 2, 4, 5, 7, and 8). The first tooth 36 are adjacent to the second tooth 37 in the circumferential direction. In the embodiment, the first tooth 36 and the second tooth 37 are provided to the same yoke piece 33. The coil 40, the first coil 41, the second coil 42, the crossover wire 43, the lead wire 46 and 47, the series coil group 50, and the coil unit 51 are intended to be combined with elements of the same phase.

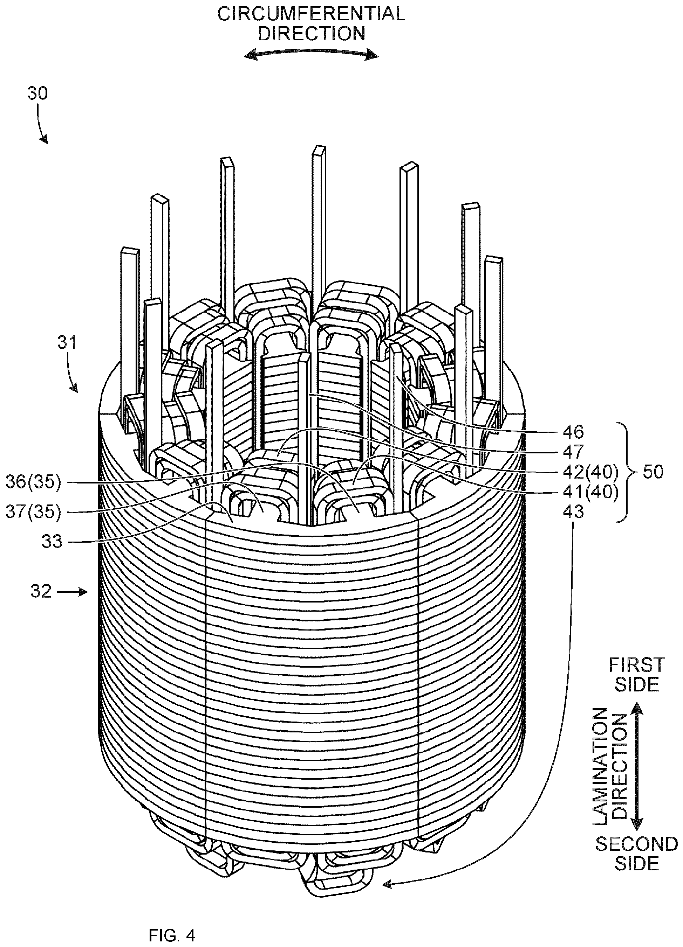

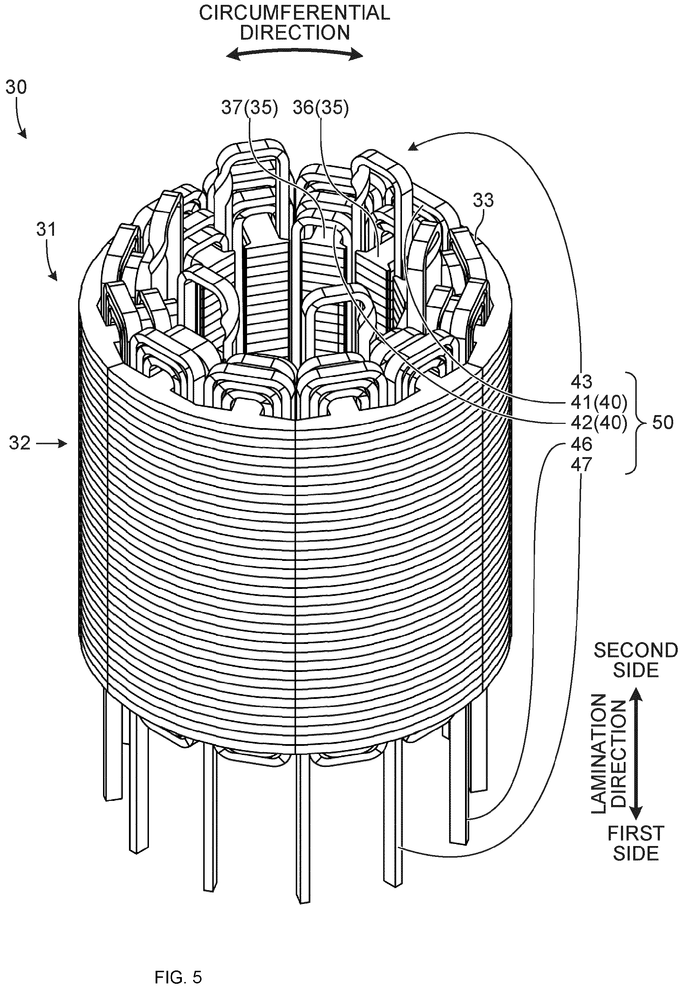

The coil 40 is provided to the tooth 35 through the insulating members 70 (see Figs. 2, and 6 to 8). In the stator 30, the plurality of coils 40 is provided to the plurality of teeth 35, respectively, in a following state (see Figs. 4 and 5). In this state, the first coil 41 is provided to the first tooth 36 of the plurality of teeth 35, and the second coil 42 is provided to the second tooth 37 of the plurality of teeth 35 (see Figs. 2, 4, 5, 7, and 8).

The coil 40 includes coil ends on the first side and the second side in the lamination direction. The coil end on the first side of the lamination direction is not accommodated in the slot 38 and protrude further than the end surface on the first side in the lamination direction of the stator core 31 toward the first side in the lamination direction (see Figs. 4 and 8). The coil end on the second side in the lamination direction is not accommodated in the slot 38 and protrude further than the end surface on the second side in the lamination direction of the stator core 31 toward the second side in the lamination direction (see Fig. 5). The coil 40 includes connecting parts on both sides in the circumferential direction. The connecting parts on both sides in the circumferential direction connect the coil ends on the first side and the second side in the lamination direction, and are respectively accommodated in the slots 38 on both sides in the circumferential direction of the tooth 35 (see Figs. 6 to 8). The connecting parts of the coil 40 have a shape along the lamination direction.

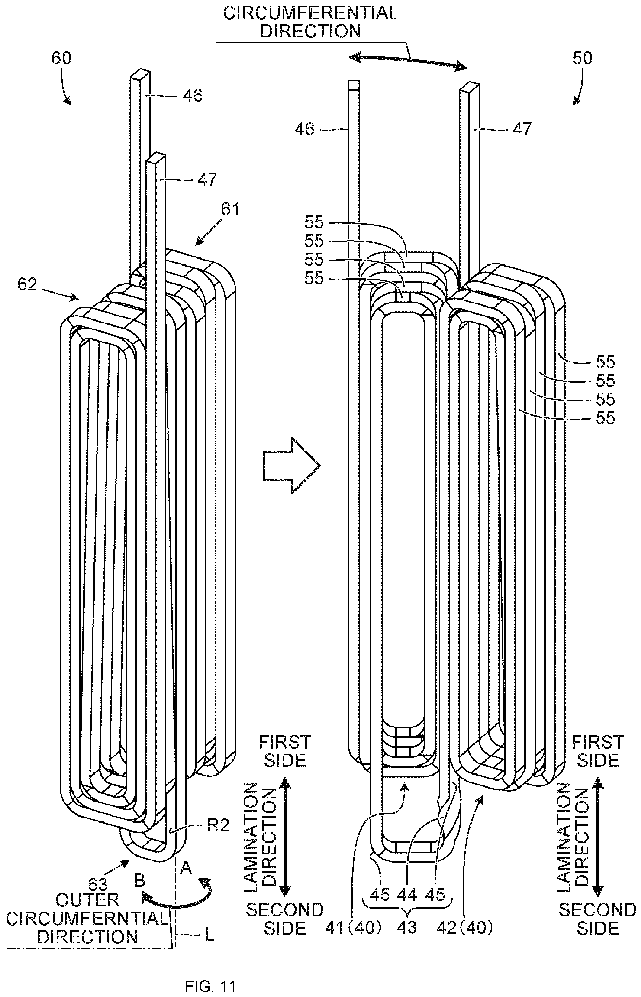

The coil 40 includes a plurality of coil layers 55 (see Figs. 6 and right side of Fig. 11). In the embodiment, the coil 40 includes four coil layers 55. The number of coil layers 55 provided in the coil 40 may be 1 to 3, or may be 5 or more. The number of coil layers 55 in the coil 40 is appropriately determined in consideration of various conditions. The coil layer 55 has a structure in which the rectangular wire is wound in a spiral shape. The number of turns of the rectangular wire in part or all of the plurality of coil layers 55 may be different or may be the same. The number of turns of the rectangular wire in the plurality of coil layers 55 is appropriately determined in consideration of various conditions. Two adjacent coil layers 55 are connected by the rectangular wire forming the coil 40 on an inner circumference side or an outer circumference side of the coil 40.

The coil 40 can employ the structure disclosed in Patent Documents 2 and 3 for the coil layer 55. Therefore, other explanation regarding the structure of the coil layer 55 is omitted. In the embodiment, the coil layer 55 shown on Fig. 6 and the right side of Fig. 11 is denoted by the reference numeral "55", and the reference numeral "55" is omitted in Figs. 1, 2, 4, 5, 7, 8, and 10.

The insulating member 70 has electrical insulation properties and electrically insulates the tooth 35 and the coil 40. That is, the plurality of coils 40 in the stator 30 are electrically insulated from the stator core 31 by the insulating members 70. In the embodiment, the insulating members 70 are provided inside the slot 38 on both side surfaces in the circumferential direction of the tooth 35 (see Figs. 2, and 6 to 8). In this case, the insulating member 70 is referred to a slot insulating paper. Slot insulating paper is also employed in stators of known motors (rotary machine). In addition, the stator 30 may employ the following insulating structure. This insulating structure includes an insulator. The insulator may be a resin molded product. Insulators have already been put to practical use and are also employed in known stators. The stator 30 can employ an insulating structure including an insulating member similar to such known stators. The stator 30 may employ an insulating structure including both the slot insulating paper and the insulator. Therefore, other explanations regarding the following points are omitted. The above-described points relate to the insulating member 70. Furthermore, the above-described points relate to the electrical insulation structure of the stator core 31 and the coil 40 using the insulating member 70.

<Series coil group 50 and method for manufacturing series coil group 50>

The series coil group 50 and the method for manufacturing the series coil group 50 will be described with reference to Figs. 4 to 11. The series coil group 50 includes the first coil 41, the second coil 42, the crossover wire 43, and the lead wires 46 and 47 (see Figs. 4 to 8, 10, and the right side of Fig. 11). The series coil group 50 is formed by the single continuous rectangular wire. In the embodiment, the single rectangular wire forming the series coil group 50 is divided into a "first part", a "second part", a "third part", a "fourth part", and a "fifth part" (see Fig. 9). The first part of the rectangular wire forms the first coil 41. The second part of the rectangular wire forms the second coil 42. The third part of the rectangular wire is continuous with the first part and the second part between the first part and the second part of the rectangular wire. The third part of the rectangular wire forms the crossover wire 43. The fourth part of the rectangular wire is continuous with the opposite side to the third part of the first part of the rectangular wire. The fourth part of the rectangular wire forms the lead wire 46. The fifth part of the rectangular wire is continuous with the opposite side to the third part of the second part of the rectangular wire. The fifth part of the rectangular wire forms the lead wire 47.

The first coil 41 is formed by winding the first part of the rectangular wire in a spiral shape, and the second coil 42 is formed by winding the second part of the rectangular wire in a spiral shape (see Figs. 9 and the right side of Fig. 11). The inside or the outside of the radial direction is the reference. In this case, the direction in which the second part of the rectangular wire is wound in the second coil 42 is the same as the direction in which the first part of the rectangular wire is wound in the first coil 41. In contrast, the flow of electricity in the second coil 42 is in the opposite direction to the flow of electricity in the first coil 41.

In the embodiment, with respect to the inner side of the radial direction as a reference, the first part of the rectangular wire in the first coil 41 is wound clockwise from the crossover wire 43 side toward the lead wire 46 side, and the second part of the rectangular wire in the second coil 42 is wound clockwise from the crossover wire 43 side toward the lead wire 47 side. For example, assume that electricity flows from the lead line 46 side to the lead line 47 side. In this case, with respect to the inside of the radial direction as a reference, electricity flows counterclockwise in the first coil 41 from the lead wire 46 side toward the crossover wire 43 side, and electricity flows clockwise in the second coil 42 from the crossover wire 43 side toward the lead wire 47 side. In the embodiment, the side of the crossover wire 43 is on the inner side in the radial direction, and the sides of the lead wires 46 and 47 are on the outer side in the radial direction.

The crossover wire 43 connects the first coil 41 and the second coil 42 in series (see Figs. 6, 10, and the right side of Fig. 11). The crossover wire 43 is provided on the second side in the lamination direction further than the end surface on the second side in the lamination direction of the stator core 31 in the following state (see Figs. 5, 7, and 8). In this state, the first coil 41 is provided to the first tooth 36, and the second coil 42 is provided to the second tooth 37. In the embodiment, the end surface on the first side in the lamination direction of the stator core 31 is referred to as a "first end surface of the stator core 31", and the end surface on the second side in the lamination direction of the stator core 31 is referred to as a "second end surface of the stator core 31". The first end surface of the stator core 31 includes the end surface on the first side in the lamination direction of the yoke 32 and the end surfaces on the first sides in the lamination direction of the plurality of teeth 35. The end surface on the first side in the lamination direction of the yoke 32 is formed by the end surfaces on the first side of the plurality of yoke pieces 33 arranged in an annular shape. The second end surface of the stator core 31 includes the end surface on the second side in the lamination direction of the yoke 32 and the end surfaces on the second sides in the lamination direction of the plurality of teeth 35. The end surface on the second side in the lamination direction of the yoke 32 is formed by the end surfaces on the second side of the plurality of yoke pieces 33 arranged in an annular shape.

The crossover wire 43 includes a twisted portion 44 and a non-twisted portion 45 (see Figs. 6 to 8 and the right side of Fig. 11). The twisted portion 44 has a shape in which the third part of the rectangular wire is twisted in an outer circumferential direction of this third part. The twisted portion 44 is formed by twisting the third part of the rectangular wire in the outer circumferential direction of this third part (see Fig. 11). A twist angle ($\theta$) of the rectangular wire is calculated by the following formula (1). In formula (1), "N" is the number of teeth 35 (the number of slots 38).

$$\theta = 180° - 360°/N \cdots (1)$$

In the embodiment, the number of teeth 35 is twelve. In this case, in the series coil group 50, the twist angle ($\theta$) of the twisted portion 44 is 150°. The twisted portion 44 is provided in a second region of the crossover wire 43. The second region of the crossover wire 43 continues to the second coil 42 and is aligned along the lamination direction in the state of the stator 30. The non-twisted portion 45 is a part of the crossover wire 43 excluding the twisted portion 44. The non-twisted portion 45 is provided in a first region, the second region, and a third region of the crossover wire 43. The first region of the crossover wire 43 continues to the first coil 41 and is aligned along the lamination direction in the state of the stator 30. The third region of the crossover wire 43 connects the first region and the second region of the crossover wire 43 and is aligned along the second end surface of the stator core 31 in the state of the stator 30. The crossover wire 43 is provided with the non-twisted portion 45 between the first coil 41 and the twisted portion 44, and between the twisted portion 44 and the second coil 42 (see Figs. 6 to 8 and the right side of Fig. 11). However, the twisted portion 44 may be provided at a side end of the second coil 42 in the second region of the crossover wire 43. The position of the twisted portion 44 in the crossover wire 43 is appropriately determined in consideration of various conditions. The side end of the second coil 42 in the second region of the crossover wire 43 forms a side end of the second coil 42 of the crossover wire 43.

A first line length of the twisted portion 44 in a length direction (see Fig. 9) of the rectangular wire is set to be equal to or less than a second line length of the non-twisted portion 45 in this length direction. The first line length of the twisted portion 44 may be equal to or less than twice the circumference length of the conductor of the rectangular wire, or may be equal to or less than the circumference length of the conductor of the rectangular wire. The first line length of the twisted portion 44 may be equal to or greater than the second thickness of the conductor of the rectangular wire, or may be equal to or greater than the second width of the conductor of the rectangular wire. The first line length of the twisted portion 44 may be equal to or less than twice the circumference length of the rectangular wire, or may be equal to or less than the circumference length of the rectangular wire. The first line length of the twisted portion 44 may be equal to or greater than the first thickness of the rectangular wire, or may be equal to or greater than the first width of the rectangular wire. It is preferable that the first line length of the twisted portion 44 is a dimension that does not cause damage to the rectangular wire in the twisted state due to twisting the rectangular wire. Examples of damage that may occur to the rectangular wire include coating scratches, coating cracks, conductor scratches, and conductor cracks. Cracks include fractures. For example, it is preferable that the first line length of the twisted portion 44 is determined taking into consideration the shear stress acting on the third part of the rectangular wire when the twisted portion 44 is formed (when the third part of the rectangular wire is twisted). For example, when the twisted portion 44 is formed, it is preferable that the shear stress acting on the third part of the rectangular wire is less than the shear stress of the conductor. The first line length of the twisted portion 44 is appropriately determined in consideration of various conditions. It is preferable that the first line length of the twisted portion 44 is set to the above-described length, and that the twisted portion 44 is provided in the second region of the crossover wire 43, but not in the first and third regions of the crossover wire 43.

The lead wires 46 and 47 are provided on the first side in the lamination direction further than the first end surface of the stator core 31 in the following state (see Figs. 4, 7, and 8). In this state, the first coil 41 is provided to the first tooth 36, and the second coil 42 is provided to the second tooth 37. The lead wires 46 and 47 are drawn out from the first end surface of the stator core 31 toward the first side in the lamination direction in the above-described state. The lead wire 46 is connected to the first coil 41 on the side opposite to the side of the crossover wire 43 of the first coil 41, and the lead wire 47 is connected to the second coil 42 on the side opposite to the side of the crossover wire 43 of the second coil 42 (see Fig. 10).

The method for manufacturing the series coil group 50 includes a first process and a second process. The first process forms an intermediate body 60. The intermediate body 60 is formed by winding the single rectangular wire in a spiral shape, and is formed into the series coil group 50 through the second process. The intermediate body 60 includes a first assembly 61, a second assembly 62, a connecting wire 63, and the lead wires 46 and 47 (see the left side of Fig. 11). In the embodiment, in order to clarify the correspondence with the series coil group 50 in the stator 30, the "lamination direction" is used as the direction for specifying the intermediate body 60.

The first assembly 61 corresponds to the first coil 41 and includes the same number of coil layers as the coil layers 55 of the first coil 41. The plurality of coil layers in the first assembly 61 is connected by the rectangular wire forming the first assembly 61 on an inner circumferential side or an outer circumferential side of the first assembly 61. The first process forms the first assembly 61 including the plurality of coil layers continued by the first part (see Fig. 9) of the rectangular wire. The second assembly 62 corresponds to the second coil 42 and includes the same number of coil layers as the coil layers 55 of the second coil 42. The plurality of coil layers in the second assembly 62 is connected by the rectangular wire forming the second assembly 62 on an inner circumferential side or an outer circumferential side of the second assembly 62. The first process forms the second assembly 62 including the plurality of coil layers continued by the second part (see Fig. 9) of the rectangular wire. In Fig. 11, the accuracy of the number of coil layers of the first assembly 61 and the number of coil layers 55 of the first coil 41, and the accuracy of the number of coil layers of the second assembly 62 and the number of coil layers 55 of the second coil 42 are not taken into consideration.

The connecting wire 63 corresponds to the crossover wire 43. The first process forms the connecting wire 63 by the third part (see Fig. 9) of the rectangular wire. In the embodiment, a region of the connecting wire 63 corresponding to the second region of the crossover wire 43 is referred to as a "second region R2 of the connecting wire 63" (see left side of Fig. 11). The second region R2 of the connecting wire 63 continues to the second assembly 62 and is provided in the lamination direction. The connecting wire 63 is different from the crossover wire 43 in that it does not include the twisted portion 44, but is otherwise similar to the crossover wire 43. The lead wire 46 of the intermediate body 60 corresponds to the lead wire 46 of the series coil group 50. The lead wire 47 of the intermediate body 60 corresponds to the lead wire 47 of the series coil group 50. The first process forms the leader wire 46 of the intermediate body 60 by the fourth part (see Fig. 9) of the rectangular wire, and forms the leader wire 47 of the intermediate body 60 by the fifth part (see Fig. 9) of the rectangular wire.

The first process can employ the methods disclosed in Patent Documents 2 and 3 mentioned above. In other words, the first process feeds the rectangular wire serving as a raw material in the length direction (see Fig. 9) of the rectangular wire to be deformed into a helical shape, and forms the intermediate body 60 including the plurality of coil layers in which the rectangular wire is wound in spiral shape. The first process forms the intermediate body 60 successively in the order of the lead wire 46, the plurality of coil layers of the first assembly 61, the connecting wire 63, the plurality of coil layers of the second assembly 62, and the lead wire 47, or forms the intermediate body 60 successively in the order of the lead wire 47, the plurality of coil layers of the second assembly 62, the connecting wire 63, the plurality of coil layers of the first assembly 61, and the lead wire 46. The first process uses winding apparatus similar to those disclosed in Patent Documents 2 and 3, and manufactures the intermediate body 60 by winding method similar to those disclosed in those documents. Other explanations regarding the first process are omitted.

The second process forms the series coil group 50 from the intermediate body 60. The second process twists the second region R2 of the connecting wire 63 (see Fig. 11). In the embodiment, the direction in which the second region R2 of the connecting wire 63 is twisted is the "A" side in the outer circumferential direction of the third part of the rectangular wire that forms the second region R2 of the connecting wire 63. The angle at which the second region R2 of the connecting wire 63 is twisted is the above-mentioned twist angle ($\theta$). In the embodiment, the second process rotates the second assembly 62 relatively to the first assembly 61 by 150° toward the "A" side in the outer circumferential direction of the third part of the rectangular wire forming the second region R2 of the connecting wire 63. Central axis L indicated by the dash-dotted line on the left side of Fig. 11 indicates the rotation center of the twisting process carried out in the second process. The central axis L may be aligned along the length direction of the rectangular wire forming the second region R2 of the connecting wire 63. The central axis L may be aligned along the lamination direction.

The intermediate body 60 is formed into the series coil group 50 by the second process. The first assembly 61 becomes the first coil 41 including the plurality of coil layers 55. The second assembly 62 becomes the second coil 42 including the plurality of coil layers 55. The twisted portion 44 is formed in the second region R2 of the connecting wire 63, and the connecting wire 63 becomes the crossover wire 43 including the twisted portion 44 and the non-twisted portion 45. The lead wire 46 of the intermediate body 60 directly becomes the lead wire 46 of the series coil group 50, and the lead wire 47 of the intermediate body 60 directly becomes the lead wire 47 of the series coil group 50.

<Effect of Embodiment>

According to the embodiment, the following effects can be obtained.

(1) The motor 10 includes the rotor 20 and the stator 30 (see Figs. 1 and 2). The stator 30 includes the stator core 31, and the plurality of coils 40 (see Figs. 2, 4, and 5). The stator core 31 is formed by laminating steel plates. The stator core 31 includes the yoke 32 and the plurality of teeth 35. The coil 40 is provided to the tooth 35 (see Figs. 2, and 4 to 8).

The stator 30 includes the first coil 41 and the second coil 42 as the plurality of coils 40, and the crossover wire 43 (see Figs. 4 to 8, 10, and the right side of Fig. 11). The first coil 41 is formed by winding the first part of the rectangular wire in a spiral shape, The second coil 42 is formed by winding the second part of the rectangular wire in a spiral shape, and the crossover wire 43 is formed by the third part of the rectangular wire (see Fig. 9 and the right side of Fig. 11). The third part of the rectangular wire is continuous with the first part and the second part between the first part and the second part of the rectangular wire (see Fig. 9). The first coil 41 is provided to the first tooth 36 of the plurality of teeth 35, the second coil 42 is provided to the second tooth 37 of the plurality of teeth 35 (see Figs. 2, 4, 5, 7, and 8). The first tooth 36 is adjacent to the second tooth 37 in the circumferential direction. The crossover wire 43 connects the first coil 41 and the second coil 42 in series (see Figs. 6, 10, and the right side of Fig. 11). The first coil 41, the second coil 42 and the crossover wire 43 form the series coil group 50 (see Figs. 4 to 8, 10, and the right side of Fig. 11).

The crossover wire 43 includes the twisted portion 44 and the non-twisted portion 45 (see Figs. 6 to 8, and the right side of Fig. 11). The twisted portion 44 has a shape in which the third part of the rectangular wire is twisted in the outer circumferential direction of this third part. The non-twisted portion 45 is the part of the crossover wire 43 excluding the twisted portion 44. The second coil 42 has the second part of the rectangular wire wound in a spiral shape in the same direction as the first part of the rectangular wire in the first coil 41 (see Fig. 9 and the right side of Fig. 11). In the crossover wire 43, the first line length of the twisted portion 44 is set to be equal to or less than the second line length of the non-twisted portion 45.

The stator 30 includes the lead wire 46 (see Figs. 4 to 8, 10, and the right side of Fig. 11). The lead wire 46 is formed by the fourth part of the rectangular wire (see Fig. 9 and the right side of Fig. 11). The fourth part of the rectangular wire is continuous with the opposite side to the third part of the first part of the rectangular wire (see Fig. 9). The lead wire 46 is provided on the first side in the lamination direction further than the first end surface of the stator core 31 (see Figs. 4, 7, and 8). The crossover wire 43 is provided on the second side in the lamination direction further than the second end surface of the stator core 31 (see Figs. 5, 7, and 8).

According to the motor 10, the series coil group 50 can be easily manufactured. After winding the single continuous rectangular wire, the series coil group 50 can be formed by twisting the third part of this rectangular wire at a position that will become the twisted portion 44 of the rectangular wire. The winding process and the connecting process of the first coil 41 and the second coil 42 can be simplified. It is possible to suppress the size of the stator 30 from increasing. The productivity of the series coil group 50 can be improved.

(2) The series coil group 50 includes two coils, the first coil 41 and the second coil 42, and one yoke piece 33 is provided with two teeth, the first tooth 36 and the second tooth 37 (see Figs. 2, 4, 5, 7, and 8). In the stator 30, the stator core 31 is divided in the following aspect. In this aspect, the number of coils 40 in one series coil group 50 and the number of teeth 35 provided to one yoke piece 33 are the same. According to this configuration, it is possible to intend to assemble one series coil group 50 with respect to one yoke piece 33. This facilitates handling of the following assemble body, and it is possible to improve the productivity of the stator 30. In this assemble body, the first coil 41 is provided to the first tooth 36 through the insulating members 70, the second coil 42 is provided to the second tooth 37 through the insulating members 70, and the first tooth 36 and the second tooth 37 are provided to the yoke piece 33 (see Fig. 8).

<Modification>

The embodiment can also be as follows. Some of the configurations of the modifications described below may be appropriately combined and employed. Hereinafter, points different from the above description will be described, and the description of the same points will be appropriately omitted.

(1) The inner rotary type motor 10 was shown as an example of a rotary machine (see Figs. 1 and 2). The stator 30 of the motor 10 includes the series coil group 50 (see Figs. 4 to 8, and 10). In the series coil group 50, the crossover wire 43 connects the first coil 41 and the second coil 42 in series, and includes the twisted portion 44 and the non-twisted portion 45 (see Figs. 6 to 8, 10, and the right side of Fig. 11). The first line length of the twisted portion 44 in the length direction of the rectangular wire is set to be equal to or less than the second line length of the non-twisted portion 45 in this length direction. The series coil group 50 can also be employed in a stator of an outer rotary type motor. In addition, the series coil group 50 can also be employed as the stator coil of a generator and a transformer coil.

(2) In the stator core 31, the yoke 32 is formed by assembling the plurality of yoke pieces 33 into an annular shape (see Fig. 2). The yoke may be an integral structure having an annular shape. In this case, the yoke is formed by laminating steel plates punched into an annular shape while punching the steel plate into the annular shape. The integral annular yoke is provided with a plurality of mounting grooves similar to the plurality of mounting grooves 34 in the yoke pieces 33. Teeth are mounted in the mounting grooves.

The stator core 31 has a divided structure in which the stator core 31 is divided into the yoke 32 and the plurality of teeth 35 (see Figs. 2, and 4 to 8). The stator core 31 is formed by mounting the teeth 35 in the mounting grooves 34 of the yoke pieces 33. A tip of the tooth 35 is formed to be wide in the circumferential direction. The tip of the tooth 35 faces the outer circumferential surface of the rotor 20. In the inner rotary type motor 10, the tip of the tooth 35 forms the inner end opposite to the outer end of the tooth 35 in the radial direction, and the coil 40 is mounted together with the insulating members 70 from the radially outer end of the tooth 35. In the stator core, the yoke piece and the tooth may be of an integral structure. In addition, the stator core may have an integral structure in which the yoke and the plurality of teeth are integrally formed as a whole. When the structure of the yoke piece or the yoke and the tooth are integrally formed, the integrally structured yoke piece or yoke and tooth are formed by laminating steel plates punched into an integral shape while punching the steel plate into the integral shape. When the tooth is integrated with the yoke piece or the yoke, the tip of the tooth does not need to have a wide shape. The tooth may have a shape having a constant width in the radial direction. In this case, the coil 40 is mounted together with the insulating members 70 in the radial direction from the tip of the tooth. In the outer rotary type motor, the tip of the tooth forms the outer end of the tooth in the radial direction.

(3) The series coil group 50 includes the first coil 41, the second coil 42, the crossover wire 43, and the lead wires 46 and 47 (see Figs. 4 to 8, 10, and the right side of Fig. 11). The series coil group may include three or more coils. Assume that the series coil group includes a third coil. In this case, the series coil group includes a second crossover wire as a second crossover wire. In this description, the first crossover wire corresponding to crossover wire 43 is referred to as the "first crossover wire". The third part of the rectangular wire forms the first crossover wire same as aforementioned. Similar to the series coil group 50, this series coil group is formed by a single continuous rectangular wire. However, this rectangular wire includes a sixth part and a seventh part in addition to the first part to the fifth part. The sixth part of the rectangular wire forms the third coil. The seventh part of the rectangular wire is continuous with the second part and the sixth part between the second part and the sixth part of the rectangular wire. The seventh part of the rectangular wire forms the second crossover wire. The fifth part of the rectangular wire is continuous with the opposite side to the seventh part of the sixth part of the rectangular wire, and forms the lead wire 47. In this series coil group, the lead wire 46, the first coil 41, the first crossover wire, the second coil 42, the second crossover wire, the third coil, and the lead wire 47 are integrally formed in this order by the single continuous rectangular wire. The second crossover wire connects the second coil 42 and the third coil in series. In other words, the first coil 41, the second coil 42 and the third coil are connected in series by the two crossover wires, the first crossover wire and the second crossover wire. It is preferable that the number of teeth provided to one yoke piece is the same as the number of coils in the series coil group.

(4) Similar to the motor 10, the "lamination direction" was used as the direction for specifying the series coil group 50 and the intermediate body 60. The series coil group 50 and the intermediate body 60 may be specified by the following "first direction", "second direction", "first axis direction", and "second axis direction". The first direction corresponds to the direction in which the rectangular wires overlap in the coil layer 55, the coil layer of the first assembly 61, and the coil layer of the second assembly 62. The second direction is perpendicular to the first direction. The second direction may coincide with the radial direction in the state of the motor 10 (rotary machine). The state of the motor 10 (rotary machine) includes the state of the stator 30. Furthermore, the state of the motor 10 (rotary machine) and the state of the stator 30 include a state in which the coils 40 is provided to the teeth 35. The second axis direction is perpendicular to the first axis direction. When the motor 10 is used as a reference, the first axis direction coincides with the lamination direction, and the second axis direction is perpendicular to both the lamination direction and the radial direction.

DESCRIPTION OF THE REFERENCE SIGNS

    10 Motor
    20 Rotor
    21 Rotor core
    22 Shaft
    30 Stator
    31 Stator core
    32 Yoke
    33 Yoke piece
    34 Mounting groove

35 Tooth
36 Frist tooth
37 Second tooth
38 Slot
40, 40U, 40V, 40W Coil
41 First coil
42 Second coil
43, 43U, 43V, 43W Crossover wire
44 Twisted portion
45 Non-twisted portion
46, 46U, 46V, 46W Lead wire
47, 47U, 47V, 47W Lead wire
50, 50U, 50V, 50W Series coil group
51, 51U, 51V, 51W Coil unit
55 Coil layer
60 Intermediate body
61 First assembly
62 Second assembly
63 Connecting wire
70 Insulating member
L Central axis
R2 Second region

**Claims**

1.  A rotary machine comprising:

    a rotor; and
    a stator,
    wherein the stator including:

      a stator core which is formed by laminating steel plates, and which includes a yoke and a plurality of teeth which protrudes from the yoke towards a side of the rotor;
      a first coil which is formed by winding a first part of a rectangular wire in a spiral shape, and which is provided to a first tooth of the plurality of teeth;
      a second coil which is formed by winding a second part of the rectangular wire in a spiral shape, and which is provided to a second tooth of the plurality of teeth;
      a crossover wire which is formed by a third part of the rectangular wire, the third part being continuous with the first part and the second part between the first part and the second part, and which connects the first coil and the second coil in series,

    wherein the crossover wire including:

      a twisted portion which is twisted the third part which forms the crossover wire in an outer circumferential direction of the third part; and
      a non-twisted portion which excludes the twisted portion,

    wherein the second coil has the second part wound in a spiral shape in a same direction as the first part,
    wherein a first line length of the twisted portion in a length direction of the rectangular wire is set to be equal to or less than a second line length of the non-twisted portion in the length direction.

2.  The rotary machine according to claim 1, wherein the stator includes a lead wire which is formed by a fourth part of the rectangular wire which continues to an opposite side to the third part of the first part, and which is provided on a first side in a lamination direction which is further than a first end surface of the first side in the lamination direction in which the steel plates of the stator core are laminated, wherein the crossover wire is provided on a second side in the lamination direction which is further than a second end surface of the second side opposite to the first side in the lamination direction of the stator core.

3.  The rotary machine according to claims 1 or 2, wherein the first tooth is adjacent to the second tooth in a circumferential direction about a rotation axis of the rotor.

4.  A series coil group comprising:

    a first coil which is formed by winding a first part of a rectangular wire in a spiral shape, and which is provided to a first tooth of a plurality of teeth provided to a stator core of a stator of a rotary machine;
    a second coil which is formed by winding a second part of the rectangular wire in a spiral shape, and which is provided to a second tooth of the plurality of teeth; and
    a crossover wire which is formed by a third part of the rectangular wire, the third part being continuous with the first part and the second part between the first part and the second part, and which connects the first coil and the second coil in series,
    wherein the crossover wire including:

      a twisted portion which is twisted the third part which forms the crossover wire in an outer circumferential direction of the third part; and
      a non-twisted portion which excludes the twisted portion,

    wherein the second coil has the second part wound in a spiral shape in a same direction as the first part,

wherein a first line length of the twisted portion in a length direction of the rectangular wire is set to be equal to or less than a second line length of the non-twisted portion in the length direction.

CIRCUMFERENTIAL
DIRECTION

10
30  20

FIRST
SIDE

LAMINATION
DIRECTION

SECOND
SIDE

FIG. 1

FIG. 2

CIRCUMFERENTIAL
DIRECTION

20

22

FIRST
SIDE

LAMINATION
DIRECTION

SECOND
SIDE

21

FIG. 3

CIRCUMFERENTIAL
DIRECTION
↔

30

31

36(35)

37(35)

33

32 →

46
47
42(40)
41(40)
43

50

FIRST
SIDE
↑
LAMINATION
DIRECTION
↓
SECOND
SIDE

FIG. 4

CIRCUMFERENTIAL
DIRECTION

FIG. 5

CIRCUMFERENTIAL
DIRECTION

50

46

47

55
55
55
55

55
55
55
55

34

33

34

35

70

70

45 44 45

43

41(40) 42(40)

FIRST
SIDE

LAMINATION
DIRECTION

SECOND
SIDE

FIG. 6

CIRCUMFERENTIAL
DIRECTION

34

33

34

36(35)

70

70

70

37(35)

70

FIRST
SIDE

LAMINATION
DIRECTION

SECOND
SIDE

45  44  45  43  42(40)  41(40)  47  46

50

FIG. 7

CIRCUMFERENTIAL DIRECTION

70
36(35)
70
70
37(35)

33
34

70

45  44  45    43  42(40)  41(40)  47  46

50

FIRST SIDE

LAMINATION DIRECTION

SECOND SIDE

FIG. 8

OUTER
CIRCUMFERNTIAL
DIRECTION

FIFTH PART

LENGTH
DIRECTION

SECOND PART

SECOND
THICKNESS

THIRD PART

FIRST PART

FOURTH PART

FIRST WIDTH

SECOND WIDTH

FIRST THICKNESS

FIG. 9

FIG. 10

FIG. 11

## INTERNATIONAL SEARCH REPORT

International application No.

**PCT/JP2023/033367**

| A. | CLASSIFICATION OF SUBJECT MATTER |
|---|---|

*H02K 3/18*(2006.01)i
FI: H02K3/18 J

According to International Patent Classification (IPC) or to both national classification and IPC

| B. | FIELDS SEARCHED |
|---|---|

Minimum documentation searched (classification system followed by classification symbols)

H02K3/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2016-101003 A (MEIDENSHA ELECTRIC MFG CO LTD) 30 May 2016 (2016-05-30)<br>abstract, paragraphs [0025]-[0031], [0035], fig. 3 | 1-4 |
| X | JP 2008-167567 A (HITACHI LTD) 17 July 2008 (2008-07-17)<br>abstract, paragraphs [0039]-[0045], fig. 5-6 | 1-4 |
| X | JP 2013-115947 A (HITACHI AUTOMOTIVE SYSTEMS LTD) 10 June 2013 (2013-06-10)<br>abstract, paragraphs [0036]-[0038], fig. 4 | 1-2, 4 |
| A | US 2018/0097418 A1 (NIDEC SR DRIVES LTD.) 05 April 2018 (2018-04-05) | 1-4 |
| A | JP 2005-51981 A (SAWAFUJI ELECTRIC CO LTD) 24 February 2005 (2005-02-24)<br>abstract, fig. 15, 17 | 1-4 |
| A | JP 2012-175822 A (TOYOTA MOTOR CORP) 10 September 2012 (2012-09-10)<br>abstract, fig. 1-3 | 1-4 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 October 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033367**

| Patent document cited in search report | | | Publication date (day/month/year) | Patent family member(s) | | | Publication date (day/month/year) |
|---|---|---|---|---|---|---|---|
| JP | 2016-101003 | A | 30 May 2016 | (Family: none) | | | |
| JP | 2008-167567 | A | 17 July 2008 | US | 2008/0174199 | A1 | |
| | | | | abstract, paragraphs [0069]-[0075], fig. 5-6 | | | |
| | | | | EP | 1940006 | A2 | |
| | | | | CN | 101222155 | A | |
| JP | 2013-115947 | A | 10 June 2013 | US | 2014/0354095 | A1 | |
| | | | | abstract, paragraphs [0058]-[0060], fig. 4 | | | |
| | | | | WO | 2013/080731 | A1 | |
| US | 2018/0097418 | A1 | 05 April 2018 | EP | 3301788 | A1 | |
| JP | 2005-51981 | A | 24 February 2005 | (Family: none) | | | |
| JP | 2012-175822 | A | 10 September 2012 | WO | 2012/114181 | A1 | |
| | | | | abstract, fig. 1-3 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016063663 A
- JP 2014093846 A
- JP 2014093847 A
- JP 2022501986 A
- JP 2011188724 A
- JP 2010110199 A
- JP 2009278708 A